# EUROPÄISCHE PATENTSCHRIFT

(11) **EP 2 523 878 B1**
(45) Veröffentlichungstag und Bekanntmachung des Hinweises auf die Patenterteilung: **19.02.2014**
(21) Anmeldenummer: 10800914.3
(22) Anmeldetag: 16.12.2010
(51) Int. Cl.: B65G 35/06

(54) **FÖRDERVORRICHTUNG**
CONVEYING DEVICE
DISPOSITIF DE TRANSPORT

(30) Priorität: 11.01.2010 DE 102010000790
(43) Veröffentlichungstag der Anmeldung: 21.11.2012
(73) Patentinhaber: Dürr Systems GmbH, 74321 Bietigheim-Bissingen (DE)
(72) Erfinder: FEDERMANN, Andreas, 70563 Stuttgart (DE); LAUER, Micheal, 70435 Stuttgart (DE)
(74) Vertreter: Gauss, Nikolai
(86) Internationale Anmeldenummer: PCT/EP2010/069902
(87) Internationale Veröffentlichungsnummer: WO 2011/083016

(56) Entgegenhaltungen:
- EP-A1- 1 013 572
- EP-A1- 1 894 864
- US-A1- 2006 162 608
- US-B1- 6 415 721

## Beschreibung

*Die Erfindung betrifft eine Fördervorrichtung, für eine wenigstens einen Laufabschnitt, insbesondere eine Kufe aufweisende Transporteinheit, z. B. ein Skid, mit einem das Gewicht der Transporteinheit an dem Laufabschnitts aufnehmenden Träger und mit wenigstens einer für eine Abrollbewegung mit dem Laufabschnitt der Transporteinheit zusammenwirkenden Antriebsrolle, welche die Transporteinheit mit einer Kraft F_{K} für das Bewegen entlang des Trägers beaufschlagt, wobei die Antriebsrolle mit einem Krafterzeugungsmittel für das Bereitstellen einer die Antriebsrolle gegen den Laufabschnitt der Transporteinheit drückenden Anpresskraft F_{P} in Wirkverbindung steht, wobei die Antriebsrolle eine relativ zum Träger verlagerbare Drehachse aufweist, und wobei die Antriebsrolle an einem mit dem Krafterzeugungsmittel beaufschlagbaren, um eine Schwenkachse schwenkbeweglichen Hebelarm drehbar gelagert ist.*

Eine derartige Fördervorrichtung ist aus der US 6,415,721 B1 bekannt. Solche Fördervorrichtungen werden in industriellen Produktionsanlagen, insbesondere in Lackier- oder Reinigungsanlagen eingesetzt. Mit ihnen können Transporteinheiten mit Produktionsgegenständen, z. B. Körbe oder auch Rahmen bzw. Gerüste, insbesondere Skids, an denen die Produktionsgegenstände aufgenommen sind, durch eine Anlage bewegt werden. Die Transporteinheiten werden hier auf einer Vielzahl von Rollen verlagert. Wenigstens teilweise sind diese Rollen als Antriebsrollen gestaltet. Die Antriebsrollen werden motorisch bewegt. Dabei übertragen sie mittels Friktion Kraft auf eine Transporteinheit. Diese Kraft wirkt als Förderkraft. Damit wird eine Transporteinheit in der Fördervorrichtung bewegt. Für das Bewegen von Transporteinheiten enthalten bekannte Fördervorrichtungen eine große Anzahl von angetriebenen Rollen, die an einer Welle mit Antrieb aufgenommen sind.

Aufgabe der Erfindung ist es, eine Fördervorrichtung bereitzustellen, die das zuverlässige Fördern von Transporteinheiten insbesondere mit einer verringerten Anzahl von Antriebsrollen ermöglicht.

Diese Aufgabe wird durch eine Fördervorrichtung nach Anspruch 1 gelöst.

Mit der erfindungsgemäßen Fördervorrichtung lassen sich insbesondere auch bekannte Transporteinheiten bewegen, die in industriellen Produktionsanlagen auf herkömmlichen Fördervorrichtungen verbreitet im Einsatz sind. Eine Modifikation solcher Transporteinheiten für den Einsatz in einer erfindungsgemäßen Fördervorrichtung ist nicht oder nur in geringem Ausmaß erforderlich.

Um in Fördervorrichtungen mit Rollen einen zuverlässigen Transport von schweren und räumlich ausgedehnten Transporteinheiten zu gewährleisten, muss sichergestellt werden, dass die Antriebsrollen Förderkraft möglichst ohne Schlupf auf eine Transporteinheit übertragen. In den erwähnten Fördervorrichtungen der eingangs genannten Art jedoch ist die mittels einer Antriebsrolle übertragbare Förderkraft FK von der Gewichtskraft abhängig, mit der die Transporteinheit auf der Antriebsrolle in dem Laufabschnitt aufliegt.

Der Erfindung liegt der Gedanke zugrunde, dass sich die Anzahl von Antriebsrollen in einer Fördervorrichtung für Transporteinheiten verringern lässt, wenn die mittels einer Antriebsrolle auf eine Transporteinheit übertragbare Förderkraft FK nicht oder zumindest nicht allein von dem Gewicht der Transporteinheit bestimmt ist. Hierzu schlägt die Erfindung eine Antriebsrolle insbesondere mit einer relativ zum Träger verlagerbaren Drehachse vor, die mit einer Anpresskraft F_{P} an dem Laufabschnitt der Transporteinheit anliegt. Um eine von dem Gewicht der Transporteinheit unabhängige Anpresskraft F_{P} zu bewirken, ist der Antriebsrolle ein Krafterzeugungsmittel für das Bereitstellen einer Anpresskraft zugeordnet. Bevorzugt umfasst das Krafterzeugungsmittel eine Verstelleinrichtung, die ein definiertes Justieren der Anpresskraft F_{P} ermöglicht, mit der eine Antriebsrolle an einem Laufabschnitt der Transporteinheit anliegt. Insbesondere kann das Krafterzeugungsmittel einen hydraulischen, pneumatischen oder mechanischen Speicher für potentielle Energie umfassen. Alternativ lässt sich über eine elektro-magnetische Betätigungsvorrichtung eine veränderbare Anpresskraft erzeugen und mehr oder weniger direkt in die Antriebsrolle einleiten. Des weiteren liegt der Erfindung der Gedanke zugrunde, Antriebsfunktion und Tragfunktion zu trennen und insbesondere unterschiedlichen Rollen zuzuordnen, um die unterschiedlichen Rollen besser an die jeweilige Funktion anpassen zu können. Insbesondere ist es bevorzugt, Tragrollen unabhängig von der Positionierung von Antriebsrollen wahlweise am Träger oder an der Transporteinheit anzuordnen. Umgekehrt ist es möglich, wenigstens eine Antriebsrolle samt Krafterzeugungseinheit unabhängig von der Positionierung der Tragrollen an der Transporteinheit anzuordnen, so dass sich eine Transporteinheit quasi autonom am Träger entlang bewegen kann. Erfindungsgemäß ist ferner vorgesehen, wenigstens eine Antriebsrolle samt einer zugehörigen Krafterzeugungseinheit am Träger anzuordnen - dies erfolgt wiederum unabhängig von einer Positionierung der Tragrollen.

Eine vorteilhafte Ausgestaltung der Erfindung sieht vor, dass eine (trägerseitig montierte) Antriebsrolle auf eine seitliche Fläche des Laufabschnitts der Transporteinheit wirkt. Sie liegt dann mit Anpresskraft F_{P} an einer Seitenfläche des Laufabschnitts an. Hierzu ist die Antriebsrolle bevorzugt mit einer relativ zu dem Träger verlagerbaren Drehachse ausgestattet und an einem mit dem Krafterzeugungsmittel beaufschlagbaren wirksamen Hebelarm drehbar gelagert. Der Hebelarm kann um eine Schwenkachse geschwenkt werden. Mit der Schwenkachse und der senkrechten Projektion des Hebelarms auf die Förderrichtung der Transporteinheit kann dann eine Ebene aufgespannt werden, die vertikal ausgerichtet ist. Mit dieser Maßnahme lassen sich Reibungskräfte an Tragrollen für den Laufabschnitt der Transporteinheit, die an einem Träger der Fördervorrichtung angeordnet sind, minimieren.

Um eine sichere Führung des Laufabschnitts der Transporteinheit in der Fördervorrichtung zu gewährleisten, ist es von Vorteil, die Anpresskraft F_{P} für die Antriebsrolle mittels einer sich an dem Hebelarm über ein (bevorzugt hydraulisches, pneumatisches oder mechanisches) Federmittel abstützenden Laufrolle zu erzeugen. Die Laufrolle kann an einer seitlichen Fläche des Laufabschnitts abrollen, die derjenigen Seitenfläche gegenüber liegt, auf welche die Antriebsrolle einwirkt.

*Die Fördervorrichtung kann auch eine weitere* Antriebsrolle *aufweisen, die* an einem schwenkbaren Hebelarm gelagert *ist,* dessen Schwenkachse mit der Förderrichtung für eine Transporteinheit in der Fördervorrichtung eine horizontal ausgerichtete Ebene oder eine zu einer horizontalen Ebene um die Schwenkachse des Hebelarms geneigte Ebene aufspannt. Das Krafterzeugungsmittel erzeugt hier an einer zu dem Träger weisenden Fläche oder an einer von dem Träger weg weisenden Fläche des Laufabschnitts der Transporteinheit eine Anpresskraft für die Antriebsrolle.

Für das Erzeugen der Anpresskraft F_{P} ist hier insbesondere ein Federmittel von Vorteil, das sich an dem Träger abstützt und auf den Hebelarm wirkt. Bevorzugt ist der Antriebsrolle eine mit der Drehachse der Antriebsrolle verlagerbar angeordnete Antriebseinheit zugeordnet, die einen Motor umfasst. Dies ermöglicht ein einfaches Antreiben der Antriebsrolle, ohne dass ein kompliziertes Getriebe mit Kardangelenken erforderlich ist.

In der Fördervorrichtung können an dem den Laufabschnitt einer Transporteinheit aufnehmenden Träger eine oder mehrere drehbar gelagerte Tragrollen angeordnet sein. Eine große Laufruhe für die in der Fördervorrichtung bewegten Transporteinheiten lässt sich erreichen, indem die an einem Träger mit Antriebsrollen angeordneten Tragrollen als Flanschrollen ausgebildet sind.

Bevorzugt gibt es in der Fördervorrichtung für die Aufnahme einer zwei Laufabschnitte aufweisenden, insbesondere als Skid ausgebildeten Transporteinheit wenigstens zwei Träger, die das Gewicht der Transporteinheit an den Laufabschnitten tragen. Die Fördervorrichtung kann insbesondere eine Vielzahl von bei einem Träger angeordnete Antriebsrollen mit einer relativ zu einem der Träger verlagerbaren Drehachse umfassen. Dabei ist jeder Antriebsrolle ein Krafterzeugungsmittel zugeordnet, das eine Anpresskraft F_{P} für die Antriebsrolle an den entsprechenden Laufabschnitt der an den Trägern bewegten Transporteinheit bewirkt.

Die erfindungsgemäße Fördervorrichtung eignet sich insbesondere für das Transportieren von Skids mit Kraftfahrzeugkarossen in einer Lackieranlage oder von Transportkörben einer industriellen Reinigungsanlage. Es zeigt sich nämlich, dass eine erfindungsgemäße Fördervorrichtung das Bewegen von Skids ermöglicht, die zwischen 3,5 m und 7 m lang sind, wobei in der Fördervorrichtung entlang des Trägers lediglich alle 3 bis 6,5 m eine Antriebsrolle vorgesehen ist. In herkömmlichen Transportvorrichtungen dagegen wird ein Skid dieser Länge sicher bewegt, indem der Abstand aufeinander folgender Antriebsrollen in der Transportvorrichtung nicht größer als 3 m gewählt wird. Weiter sind erfindungsgemäß Skids vorgesehen, an denen Antriebsrollen mit zugehöriger Antriebseinheit und einer Krafterzeugungseinheit montiert sind, wobei die Antriebsrollen an einem Abschnitt eines Trägers abrollen können.

Indem entlang des Trägers der Fördervorrichtung zum Steuern der Antriebe der Antriebsrollen für das Erfassen der Position einer Transporteinheit mit einer Steuereinrichtung verbundene Positionsdetektoren vorgesehen werden, ist es möglich, eine Vielzahl von Transporteinheiten gleichzeitig automatisch und kontrolliert durch die Fördervorrichtung zu bewegen. Um das Bewegen einer Transporteinheit in einer weiteren Förderrichtung zu ermöglichen, ist es von Vorteil, den wenigstens einen Träger in der Fördervorrichtung an einer zusätzlichen Linearbewegungseinheit aufzunehmen.

Im Folgenden wird die Erfindung anhand der in der Zeichnung in schematischer Weise dargestellten Ausführungsbeispiele näher erläutert.

Es zeigen:
- Fig. 1: eine erste Fördervorrichtung für eine als Skid ausgebildete Transporteinheit;
- Fig. 2: eine Ausschnitt der ersten Fördervorrichtung mit einer Antriebsrolle;
- Fig. 3: eine zweite Fördervorrichtung für eine als Skid ausgebildete Transporteinheit;
- Fig. 4: eine dritte Fördervorrichtung für eine als Skid ausgebildete Transporteinheit; und
- Fig. 5: einen Ausschnitt der dritten Fördervorrichtung mit einer Antriebsrolle.

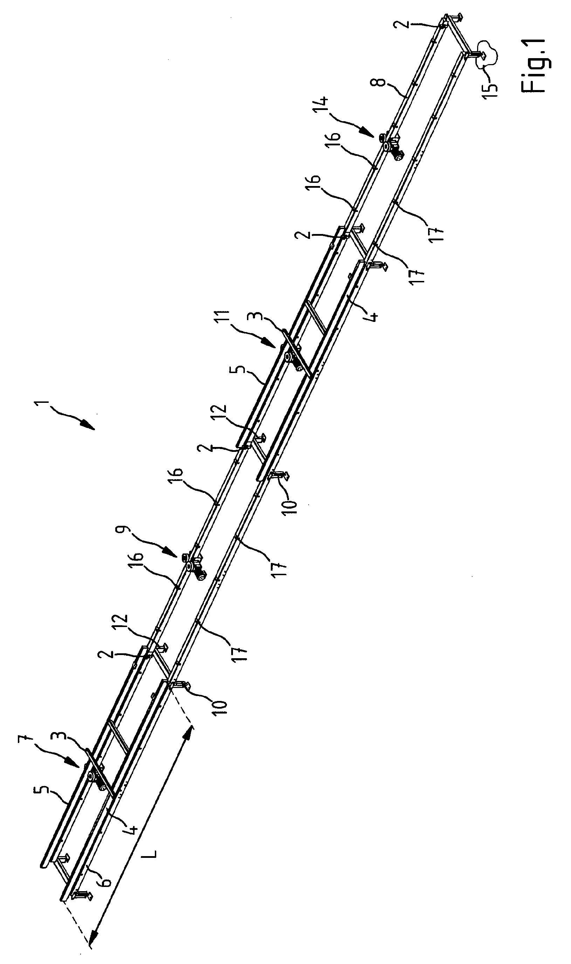

Die in Fig. 1 gezeigte Fördervorrichtung 1 ist ein sogenannter Rollenbahnförderer. Sie eignet sich insbesondere für das Transportieren von Fahrzeugkarossen in einer Lackieranlage. Die Fördervorrichtung 1 umfasst einen ersten Träger 6 und einen zweiten Träger 8. Entlang der Träger 6, 8 lässt sich ein für die Aufnahme von Kraftfahrzeugkarossen ausgelegter Skid 3 bewegen. Der Skid 3 hat hierzu Laufabschnitte in Form von Kufen 4, 5.

An den Trägern 6, 8 sind mit einem Abstand von 0,5 m bis 2 m drehbar gelagerte Tragrollen 16, 17 angeordnet. Das Gewicht des Skids 3 wird bevorzugt über die Kufen 4, 5 des Skids zunächst in die Tragrollen 16, 17 und von dort in die Träger 6, 8 eingeleitet. Die Träger 6, 8 ruhen auf Stützen 10, 12. Die Stützen 10, 12 sind auf einem Boden 15 mit Fundament festgelegt.

Um den Skid 3 zu bewegen, enthält die Fördervorrichtung 1 eine Vielzahl von Antriebseinheiten 7, 9, 11, 14. Für das automatische Steuern der Bewegung einer Vielzahl von Skids 3 in der Fördervorrichtung 1 gibt es Positionsdetektoren 2, die entlang des Trägers 8 angeordnet sind.

Der Skid 3 hat eine Länge L, die vorzugsweise zwischen L = 3,5 m und L = 7 m liegt. Er ist aus Stahlträgern mit einem Rechteckprofil aufgebaut. Bevorzugt hat das Rechteckprofil dieser Stahlträger eine Breite b = 5 cm und die Höhe h = 10 cm. Skids mit diesen Abmessungen werden als Transporteinheiten in Fördervorrichtungen für Karossen, Fahrzeugteile und Fahrzeuge in der Automobilproduktion verbreitet eingesetzt. In der Automobilproduktion bilden solche Skids einen quasi Standard für Transporteinheiten, die mit verschiedenen Fördervorrichtungen bewegt werden können.

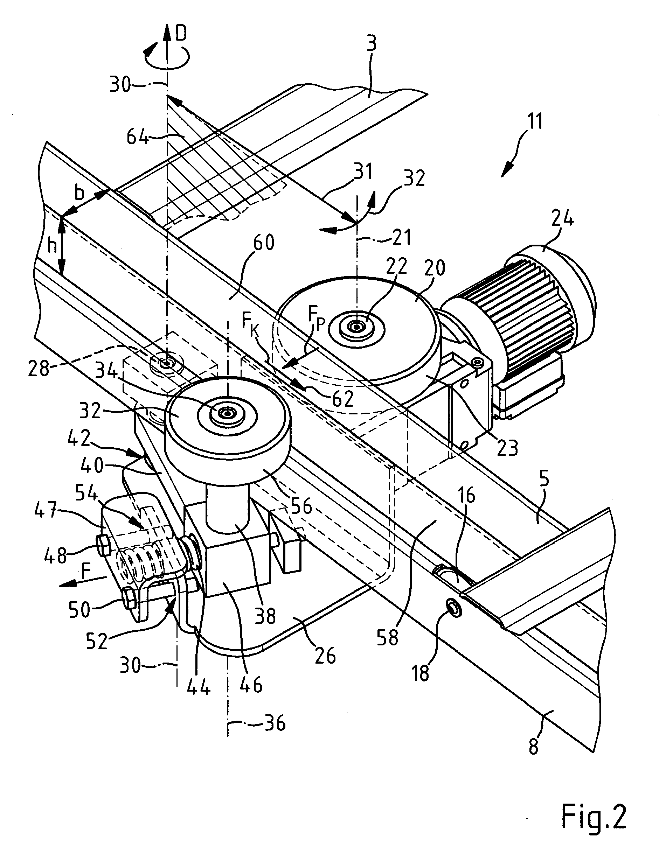

Die Fig. 2 zeigt einen Abschnitt, der Fördervorrichtung 1 mit der Antriebseinheit 11. Die Kufe 5 ist auf den Träger 8 mit Tragrollen 16 geführt. Eine Tragrolle 16 ist auf einer Welle 18 an dem Träger 8 drehbar gelagert. Um ein sicheres Führen der Kufe 5 des Skids 3 an dem Träger 8 zu gewährleisten, haben die an dem Träger 8 angeordneten Tragrollen 16 eine Flanschrollengeometrie.

Die Antriebseinheit 11 umfasst eine Antriebsrolle 20. Die Antriebsrolle 20 ist in einem Drehlager 22 drehbar gelagert. In dem Drehlager 22 kann die Antriebsrolle 20 um die Drehachse 21 gedreht werden. Die Antriebsrolle 20 hat eine Rollenfläche 23, die an der seitlichen Fläche 60 der Kufe 5 des Skids 3 anliegt. Die Rollenumfangsfläche 23 oder die gesamte Antriebsrolle 20 ist bevorzugt ganz oder teilweise aus einem elastomeren Kunststoff, insbesondere einem Polyurethan (PUR) oder einem EPDM-Gummi gefertigt. In einem modifizierten Ausführungsbeispiel weist die Rollenumfangsfläche 23 eine Beschichtung oder Bereifung aus einem elastomeren Kunststoff auf.

Der Antriebsrolle 20 ist ein Elektromotor 24 als Antrieb zugeordnet. Der Elektromotor 24 hat ein sogenanntes schweres Lüfterrad mit einer großen trägen Masse. Dies gewährleistet, dass die Fördervorrichtung mit Elektromotoren im Ein-Aus-Betrieb betrieben werden kann, ohne dass eine komplizierte Steuerelektronik für ein schonendes, stetiges Ein- und Ausfahrverhalten des Elektromotors erforderlich ist, um ruckartige Bewegungen zu vermeiden.

Der Elektromotor 24 und die Antriebsrolle 20 sind an einer schwenkbaren Halteeinheit 26 aufgenommen. Die schwenkbare Halteeinheit 26 ist mit einem Drehgelenk 28 an dem Träger 8 gehalten. Die schwenkbare Halteeinheit 26 kann in dem Drehgelenk 28 um eine Schwenkachse 30 geschwenkt werden. Mittels der Halteeinheit 26 wird ein wirksamer schwenkbarer Hebelarm 31 für das Drehlager 22 mit der Antriebsrolle 20 gebildet. Die Antriebsrolle 20 kann mit dem wirksamen Hebelarm 31 so entsprechend dem Doppelpfeil 32 relativ zu dem Träger 8 um die Achse 30 bewegt werden.

Der Antriebsrolle 20 ist mit einer Laufrolle 32 kombiniert. Die Laufrolle 32 hat besonders bevorzugt eine mit einem elastomeren Kunststoff (z.B. PUR) beschichtete Rollenfläche 56. Die Laufrolle 32 ist an einem Drehlager 34 aufgenommen, das eine Drehachse 36 hat. Das Drehlager 34 ist über den Halteabschnitt 38 mit einem Hebelarm 40 verbunden. Dieser Hebelarm 40 ist in einem Schwenklager 42 gehalten, das eine der Achse 30 entsprechende Schwenkachse hat.

Eine Federeinheit 44 ist in einer Federaufnahme 46 an dem Hebelarm 40 festgelegt. Die Federeinheit 44 kann auch vorgespannt sein. An der Halteeinheit 26 ist die Federeinheit 44 in einem als Verstelleinrichtung wirkenden Justageabschnitt 47 aufgenommen. Der Justageabschnitt 47 umfasst zwei Einstellschrauben 48, 50. Die Einstellschrauben 48, 50 greifen in Gewinde 52, 54 an der Halteeinheit 26 ein.

Die Laufrolle 32 liegt an der Seitenfläche 58 der Kufe 5 an. Sie wird von der Federeinheit 44 gegen die Seitenfläche 58 gedrückt. Dabei wird die schwenkbare Halteeinheit 26 mit der Kraft F beaufschlagt. Diese Kraft erzeugt in der Achse 30 das Drehmoment D. Das Drehmoment D wirkt über den wirksamen Hebelarm 31 auf die Antriebsrolle 20. Es erzeugt eine Anpresskraft F_{P} für die Antriebsrolle 20 an der Seitenfläche 60 der Kufe 5. Durch Justieren der Einstellschrauben 48, 50 für die Federeinheit 44 ist es möglich, die Größe dieser Anpresskraft F_{P} für die Antriebsrolle 20 einzustellen.

Mittels der Antriebsrolle 20 wird aufgrund von Haftreibung zwischen der Laufoberfläche 22 der Antriebsrolle 20 der Seitenfläche 60 der Kufe 5 eine in Richtung des Pfeils 62 wirkende Förderkraft F_{K} in die Kufe 5 eingeleitet. Die Richtung 62 der Förderkraft F_{K} entspricht der Förderrichtung des Skids 3 in der Transportvorrichtung 1. Die Größe der Förderkraft F_{K} ist durch die Anpresskraft F_{P} der Antriebsrolle 20 an der Seitenfläche 60 der Kufe 5 und den Reibungskoeffizient für die Reibungskraft zwischen der Rollenfläche 23 und der Seitenfläche 60 bestimmt. Dabei spannt die senkrechte Projektion des Hebelarms 31 auf die Förderrichtung 62 mit der Schwenkachse 30 eine vertikal ausgerichtete Ebene auf. Diese Maßnahme gewährleistet, dass die Anpresskraft F_{P} bei den Tragrollen 16 keine oder nur geringe Kräfte hervorruft, die eine zu der Gewichtskraft parallele Kraftkomponente haben, die zusätzliche unerwünschte Reibung in den Lagern für die Tragrollen 16 hervorrufen und unnötigen Verschleiß bewirken würden.

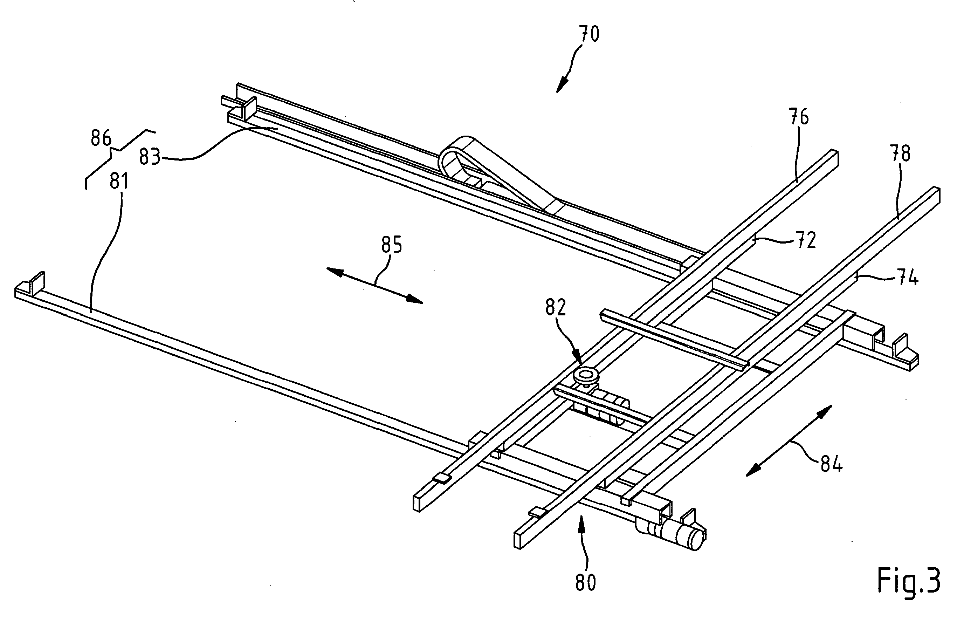

Die Fördervorrichtung 70 in Fig. 3 ist als Fördervorrichtung zum Bewegen eines Skids in einer Rotationstauchanlage ausgebildet. Die Fördevorrichtung 70 umfasst einen Träger 72 und einen Träger 74 für die Kufen 76, 78 eines Skids 80. Die Kufen 76, 78 des Skids 80 sind mit einer eine Antriebsrolle aufweisende Antriebseinheit 82 entsprechend dem Doppelpfeil 84 an dem Träger 72, 74 bewegbar geführt. Die Antriebseinheit 82 ist an dem Träger 72 befestigt. Der Aufbau Antriebseinheit 82 entspricht dem der anhand von Fig. 2 erläuterten Antriebseinheit 11. Die Träger 72, 74 mit der Antriebseinheit 82 wiederum sind an einer Linearbewegungseinheit 86 aufgenommen. Die Linearbewegungseinheit 86 hat ein Schienensystem mit Schienen 81, 83. In der Linearbewegungseinheit 86 können die Träger 72, 74 entsprechend dem Doppelpfeil 85 auf den Schienen 81, 82 mittels eines Schleppkettenmechanismus bewegt werden.

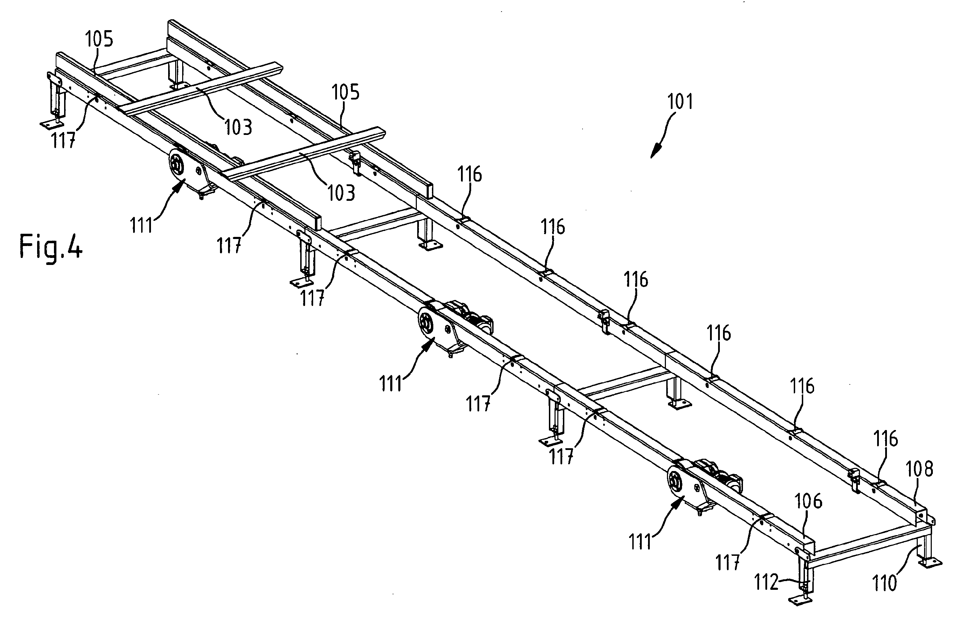

Die Fördervorrichtung 101 in Fig. 4 hat einen Träger 106 und einen Träger 108. Die Träger 106, 108 ruhen auf Stützen 110, 112. Für das Bewegen eines Skids 103 hat die Fördervorrichtung 101 Antriebseinheiten 111. Die Kufe 104 des Skids 103 ist an Tragrollen 116 auf dem Träger 108 geführt. An dem Träger 106 gibt es Tragrollen 117, die das Gewicht des Skids 103 dessen Kufe 104 aufnehmen.

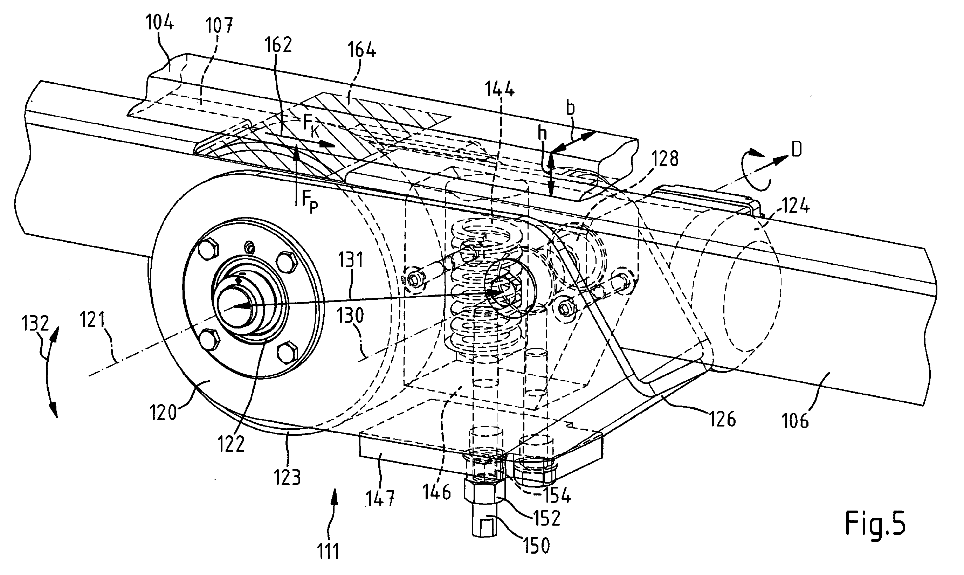

Die Fig. 5 zeigt einen Abschnitt der Fördervorrichtung 101 gemäß Fig. 4 mit einer Antriebseinheit 111. Die Antriebseinheit 111 umfasst eine Antriebsrolle 120, die in einem eine Drehachse 121 aufweisenden Drehlager 122 drehbar gelagert ist. Die Antriebsrolle 120 hat eine Laufoberfläche 123 aus einem elastomeren Kunststoff (insbesondere einem PUR). Als Antrieb ist der Antriebsrolle 120 ein Elektromotor 124 zugeordnet. Der Elektromotor 124 und die Antriebsrolle 120 sind an einer schwenkbaren Halteeinheit 126 aufgenommen. Die schwenkbare Halteeinheit 126 ist in einem Drehgelenk 128 an dem Träger 106 gehalten. Die Halteeinheit 126 kann in dem Drehgelenk 128 um die Achse 130 geschwenkt werden. Mittels der Halteeinheit 126 wird ein schwenkbarer wirksamer Hebelarm 131 für das Drehlager 122 mit der Antriebsrolle 120 gebildet. Die Antriebsrolle 120 kann so entsprechend dem Doppelpfeil 132 relativ zu dem Träger 108 um die Achse 130 bewegt werden.

Der Hebelarm 131 ist mittels eines sich an der Halteeinheit 126 abstützenden Federeinheit 144 mit Kraft beaufschlagt. Die Federeinheit 144 ist in einer Federaufnahme 146 an dem Träger 106 festgelegt. An der Halteeinheit 126 ist die Federeinheit 144 in dem Justageabschnitt 147 aufgenommen. Zum Justieren der Federeinheit 144 gibt es dort als Verstelleinrichtung eine Einstellschraube 150 mit einer Gewindemutter 152 und einem Gewinde 154.

Die Antriebsrolle 120 liegt an der Unterseite 107 der Kufe 104 an. Dabei wird sie über die Federeinheit 144, die in der Schwenkachse 130 der Halteeinheit 126 ein Drehmoment D erzeugt, mit einer Anpresskraft F_{P} beaufschlagt. Die Anpresskraft F_{P} lässt sich durch Justieren der Einstellschraube 150 unabhängig von der über die Kufe 104 in den Träger 106 eingeleiteten Gewichtskraft des Skids 103 einstellen. Mittels der Antriebsrolle 120 kann so eine Förderkraft F_{K} in Richtung des Pfeils 162 in die Kufe 104 des Skids 103 eingeleitet werden. Hier wird mittels der senkrechten Projektion der Schwenkachse 130 des Hebelarms 131 auf die Förderrichtung 162 mit der Förderrichtung 162 eine horizontal ausgerichtete Ebene 164 aufgespannt.

Zusammenfassend sind die folgenden bevorzugten Merkmale einer erfindungsgemäßen Vorrichtung festzuhalten: Die Fördervorrichtung 1 ist für das Bewegen einer Transporteinheit 3 ausgelegt, die wenigstens einen Laufabschnitt 4, 5 aufweisen. Der Laufabschnitt 4, 5 kann insbesondere als Kufe eines Skids ausgebildet sein. Die Fördervorrichtung 1 hat einen Träger 6, 8, der das Gewicht der Transporteinheit 3 an dem Laufabschnitt 4, 5 aufnimmt. Die Fördervorrichtung 1 umfasst wenigstens eine für eine Abrollbewegung an dem Laufabschnitt 4, 5 der Transporteinheit 3 ausgelegte Antriebsrolle 20, welche die Transporteinheit 3 mit einer Kraft F_{K} für das Bewegen entlang des Trägers 6, 8 beaufschlagt. Die Antriebsrolle 20 steht mit einem Krafterzeugungsmittel 44 für das Bereitstellen einer die Antriebsrolle 20 gegen den Laufabschnitt 4, 5 der Transporteinheit 3 drückende Anpresskraft F_{P} in Wirkverbindung.

## Patentansprüche

1. Fördervorrichtung (1, 70, 101) für eine wenigstens einen Laufabschnitt (4, 5, 74, 76, 104, 105), insbesondere eine Kufe aufweisende Transporteinheit (3, 80, 103), z. B. ein Skid, mit einem das Gewicht der Transporteinheit (3, 80, 103) an dem Laufabschnitt (4, 5, 74, 76, 104, 105) aufnehmenden Träger (6, 8, 72, 74, 106, 108) und mit wenigstens einer für eine Abrollbewegung mit dem Laufabschnitt (4, 5, 74, 76, 104, 105) der Transporteinheit (3, 80, 103) zusammenwirkenden Antriebsrolle (20, 120), welche die Transporteinheit (3, 80, 103) mit einer Kraft F_{K} für das Bewegen entlang des Trägers (6, 8, 72, 74, 106, 108) beaufschlagt, *wobei*
die Antriebsrolle (20, 120) mit einem Krafterzeugungsmittel (44, 144) für das Bereitstellen einer die Antriebsrolle (20, 120) gegen den Laufabschnitt (4, 5, 74, 76, 104, 105) der Transporteinheit (3, 80, 103) drückenden Anpresskraft F_{P} in Wirkverbindung steht, *wobei*
die Antriebsrolle (20, 120) eine relativ zum Träger (6, 8, 72, 74, 106, 108) verlagerbare Drehachse (21, 121) aufweist, und *wobei*
die Antriebsrolle (20, 120) an einem mit dem Krafterzeugungsmittel (44, 144) beaufschlagbaren, um eine Schwenkachse (30, 130) schwenkbeweglichen Hebelarm (31, 131) drehbar gelagert ist,
**dadurch gekennzeichnet, dass**
die senkrechte Projektion des Hebelarms (31) auf die Förderrichtung (62) mit der Schwenkachse (30) eine vertikal ausgerichtete Ebene (64) aufspannt und das Krafterzeugungsmittel (44) eine Anpresskraft F_{P} der Antriebsrolle (20) an einer Seitenfläche (60) des Laufabschnitts (4, 5) des Transporteinheit (3) bewirkt.

2. Fördervorrichtung nach Anspruch 1, **dadurch gekennzeichnet, dass** die Anpresskraft F_{P} mittels einer sich an dem Hebelarm (31) über ein Federmittel (44) abstützenden Laufrolle (32) erzeugt wird, welche für das Abrollen an einer der Seitenfläche (60) der Antriebsrolle (20) gegenüberliegenden Seitenfläche (58) des Laufabschnitts (5) der Transporteinheit (3) ausgelegt ist.

3. Fördervorrichtung nach Anspruch 1 oder 2, **dadurch gekennzeichnet, dass** Krafterzeugungsmittel (44, 144) eine Verstelleinrichtung (48, 50, 47, 158, 149, 150) für das definierte Einstellen der Anpresskraft F_{P} für die Antriebsrolle (20, 120) umfasst.

4. Fördervorrichtung nach einem der Ansprüche 1 bis 3, **dadurch gekennzeichnet, dass** der Antriebsrolle (20, 120) eine mit der Drehachse (21, 121) der Antriebsrolle (20, 120) verlagerbare Antriebseinheit mit Motor (24, 124) zugeordnet ist.

5. Fördervorrichtung nach einem der Ansprüche 1 bis 4, **dadurch gekennzeichnet, dass** an dem Träger (6, 8, 106, 108) zur Aufnahme des Laufabschnitts (4, 5, 104, 105) der Transporteinheit (3, 103) eine oder mehrere drehbar gelagerte Tragrollen (16, 116, 117) angeordnet sind.

6. Fördervorrichtung nach Anspruch 5, **dadurch gekennzeichnet, dass** die an einem Träger (8) mit Antriebsrollen (20) angeordnete Tragrollen als Flanschrollen (16) ausgebildet sind.

7. Fördervorrichtung nach einem der Ansprüche 1 bis 6, **dadurch gekennzeichnet, dass** für die Aufnahme einer zwei Laufabschnitte (4, 5, 104, 105) aufweisenden, insbesondere als Skid ausgebildeten Transporteinheit (3, 103) zwei das Gewicht der Transporteinheit (3, 103) an den Laufabschnitten (4, 5, 104, 105) aufnehmende Träger (6, 8, 106, 108) vorgesehen sind und es eine Vielzahl von bei einem Träger (8, 106) angeordneten Antriebsrollen (20, 120) mit relativ zu einem der Träger (8, 106) verlagerbarer Drehachse (21, 121) gibt, die mit einem Krafterzeugungsmittel (44, 144) für das Erzeugen einer Anpresskraft F_{P} der Antriebsrolle (20, 120) an den an diesem Träger (8, 106) bewegten Laufabschnitt (5, 104) der Transporteinheit (5, 104) in Wirkverbindung steht.

8. Fördervorrichtung nach einem der Ansprüche 1 bis 7, **dadurch gekennzeichnet, dass** für das Erfassen der Position einer Transporteinheit (3) entlang des Trägers (8) angeordnete Positionsdetektoren (2) vorgesehen sind.

9. Fördervorrichtung nach einem der Ansprüche 1 bis 8, **dadurch gekennzeichnet, dass** der Träger (72, 74) an einer Linearbewegungseinheit (86) für das Bewegen der Transporteinheit (80) in einer weiteren Förderrichtung (85) aufgenommen ist.

10. *Fördervorrichtung nach einem der Ansprüche 1 bis 9, **gekennzeichnet durch** eine weitere für eine Abrollbewegung mit dem Laufabschnitt (104, 105) der Transporteinheit (103) zusammenwirkenden Antriebsrolle (120), welche die Transporteinheit (103) mit einer Kraft F_{K} für das Bewegen entlang des Trägers (106, 108) beaufschlagt, wobei*
*die weitere Antriebsrolle (120) mit einem Krafterzeugungsmittel (144) für das Bereitstellen einer die Antriebsrolle (120) gegen den Laufabschnitt (104, 105) der Transporteinheit (103) drückenden Anpresskraft F_{P} in Wirkverbindung steht, wobei*
*die weitere Antriebsrolle (120) eine relativ zum Träger (106, 108) verlagerbare Drehachse (121) aufweist, wobei*
*die weitere Antriebsrolle (120) an einem mit dem Krafferzeugungsmittel (144) beaufschlagbaren, um eine Schwenkachse (130) schwenkbeweglichen Hebelarm (131) drehbar gelagert ist, und wobei die senkrechte Projektion der Schwenkachse (130) des Hebelarms (131) auf die Förderrichtung (162) mit der Förderrichtung (162) eine horizontal ausgerichtete Ebene (164) oder eine zu einer horizontalen Ebene um die Schwenkachse (130) des Hebelarms (131) geneigte Ebene aufspannt und das Krafferzeugungsmittel (144) eine Anpresskraft F_{P} der Antriebsrolle (120) an einer zu dem Träger (106) weisenden Fläche (107) oder an einer von dem Träger (106) wegweisenden Fläche des Laufabschnitts (104) der Transporteinheit (103) bewirkt.*

11. *Fördervorrichtung nach Anspruch 10, **dadurch gekennzeichnet, dass** die Anpresskraff F_{P} mittels eines sich an dem Träger (106) abstützenden Federmittels (144) erzeugt wird, das an dem Hebelarm (131) befestigt ist.*

12. *Lackieranlage mit einer Fördervorrichtung (1, 70, 101) nach einem der Ansprüche 1 bis 11.*

## Claims

1. Conveying apparatus (1, 70, 101) for a transport unit (3, 80, 103), for example a skid, having at least one running section (4, 5, 74, 76, 104, 105), in particular a runner, with a support (6, 8, 72, 74, 106, 108) receiving the weight of the transport unit (3, 80, 103) on the running section (4, 5, 74, 76, 104, 105), and with at least one driving roller (20, 120) which interacts with the running section (4, 5, 74, 76, 104, 105) of the transport unit (3, 80, 103) for a rolling movement and subjects the transport unit (3, 80, 103) to a force F_{K} for movement along the support (6, 8, 72, 74, 106, 108), wherein
the driving roller (20, 120) is operatively connected to a force-generating means (44, 144) for providing a press-on force F_{P} pressing the driving roller (20, 120) against the running section (4, 5, 74, 76, 104, 105) of the transport unit (3, 80, 103), wherein
the driving roller (20, 120) has an axis of rotation (21, 121) which is displaceable relative to the support (6, 8, 72, 74, 106, 108), and wherein
the driving roller (20, 120) is mounted rotatably on a lever arm (31, 131) which can be acted upon by the force-generating means (44, 144) and is pivotable about a pivot axis (30, 130), **characterized in that**
the perpendicular projection of the lever arm (31) to the conveying direction (62) with the pivot axis (30) covers a vertically oriented plane (64), and the force-generating means (44) brings about a press-on force Fp of the driving roller (20) on a side surface (60) of the running section (4, 5) of the transport unit (3).

2. Conveying apparatus according to Claim 1, **characterized in that** the press-on force Fp is generated by means of a running roller (32) which is supported on the lever arm (31) via a spring means (44) and is designed for rolling on a side surface (58) of the running section (5) of the transport unit (3), which side surface is opposite the side surface (60) of the driving roller (20).

3. Conveying apparatus according to Claim 1 or 2, **characterized in that** the force-generating means (44, 144) comprises an adjustment device (48, 50, 47, 158, 149, 150) for the defined setting of the press-on force F_{P} for the driving roller (20, 120).

4. Conveying apparatus according to one of Claims 1 to 3, **characterized in that** the driving roller (20, 120) is assigned a driving unit which is displaceable with the axis of rotation (21, 121) of the driving roller (20, 120) and has a motor (24, 124).

5. Conveying apparatus according to one of Claims 1 to 4, **characterized in that** one or more rotatably mounted supporting rollers (16, 116, 117) is or are arranged on the support (6, 8, 106, 108) for receiving the running section (4, 5, 104, 105) of the transport unit (3, 103).

6. Conveying apparatus according to Claim 5, **characterized in that** the supporting rollers arranged on a support (8) with driving rollers (20) are designed as flanged rollers (16).

7. Conveying apparatus according to one of Claims 1 to 6, **characterized in that** two supports (6, 8, 106, 108) taking up the weight of the transport unit (3, 103) on the running sections (4, 5, 104, 105) are provided for receiving a transport unit (3, 103), which has two running sections (4, 5, 104, 105) and is designed in particular as a skid, and there is a multiplicity of driving rollers (20, 120) which are arranged in a support (8, 106) and have an axis of rotation (21, 121) which is displaceable relative to one of the supports (8, 106) and is operatively connected to a force-generating means (44, 144) for generating a press-on force F_{P} of the driving roller (20, 120) on the running section (5, 104) of the transport unit (5, 104), which running section (5, 104) is moved on said support (8, 106).

8. Conveying apparatus according to one of Claims 1 to 7, **characterized in that** position detectors (2) which are arranged along the support (8) are provided for detecting the position of a transport unit (3).

9. Conveying apparatus according to one of Claims 1 to 8, **characterized in that** the support (72, 74) is accommodated on a linear movement unit (86) for moving the transport unit (80) in a further conveying direction (85).

10. Conveying apparatus according to one of Claims 1 to 9, **characterized by** a further driving roller (120) which interacts with the running section (104, 105) of the transport unit (103) for a rolling movement and subjects the transport unit (103) to a force F_{K} for movement along the support (106, 108), wherein
the further driving roller (120) is operatively connected to a force-generating means (144) for providing a press-on force F_{P} pressing the driving roller (120) against the running section (104, 105) of the transport unit (103), wherein
the further driving roller (120) has an axis of rotation (121) which is displaceable relative to the support (106, 108), wherein
the further driving roller (120) is mounted rotatably on a lever arm (131) which can be acted upon by the force-generating means (144) and is pivotable about a pivot axis (130), and wherein the perpendicular projection of the pivot axis (130) of the lever arm (131) to the conveying direction (162) covers, with the conveying direction (162), a horizontally oriented plane (164) or a plane inclined about the pivot axis (130) of the lever arm (131) with respect to a horizontal plane, and the force-generating means (144) brings about a press-on force F_{P} of the driving roller (120) on a surface (107) of the running section (104) of the transport unit (103), which surface faces the support (106), or on a surface thereof which faces away from the support (106).

11. Conveying apparatus according to Claim 10, **characterized in that** the press-on force Fp is generated by means of a spring means (144) which is supported on the support (106) and is fastened to the lever arm (131).

12. Painting system with a conveying apparatus (1, 70, 101) according to one of Claims 1 to 11.

## Revendications

1. Dispositif de transport (1, 70, 101) pour une unité de transport (3, 80, 103) présentant au moins une portion de roulement (4, 5, 74, 76, 104, 105), en particulier un patin, par exemple un patin glissant, comprenant un support (6, 8, 72, 74, 106, 108) recevant le poids de l'unité de transport (3, 80, 103) sur la portion de roulement (4, 5, 74, 76, 104, 105) et au moins un rouleau d'entraînement (20, 120) coopérant pour un mouvement de roulement avec la portion de roulement (4, 5, 74, 76, 104, 105) de l'unité de transport (3, 80, 103), lequel rouleau d'entraînement sollicite l'unité de transport (3, 80, 103) avec une force F_{K} pour le déplacement le long du support (6, 8, 72, 74, 106, 108),
le rouleau d'entraînement (20, 120) étant en liaison fonctionnelle avec un moyen de génération de force (44, 144) pour fournir une force d'application F_{P} pressant le rouleau d'entraînement (20, 120) contre la portion de roulement (4, 5, 74, 76, 104, 105) de l'unité de transport (3, 80, 103),
le rouleau d'entraînement (20, 120) présentant un axe de rotation (21, 121) déplaçable par rapport au support (6, 8, 72, 74, 106, 108) et
le rouleau d'entraînement (20, 120) étant monté à rotation au niveau d'un bras de levier (31, 131) pouvant être sollicité avec le moyen de génération de force (44, 144) et déplaçable par pivotement autour d'un axe de pivotement (230, 130),
**caractérisé en ce que**
la projection verticale du bras de levier (31) sur la direction de transport (62) forme avec l'axe de pivotement (30) un plan orienté verticalement (64) et le moyen de génération de force (44) provoque une force d'application F_{P} du rouleau d'entraînement (20) contre une face latérale (60) de la portion de roulement (4, 5) de l'unité de transport (3).

2. Dispositif de transport selon la revendication 1, **caractérisé en ce que** la force d'application F_{P} est produite au moyen d'un rouleau de roulement (32) s'appuyant sur le bras de levier (31) par le biais d'un moyen de ressort (44), lequel rouleau de roulement est conçu pour rouler sur une surface latérale (58) de la portion de roulement (5) de l'unité de transport (3) opposée à la surface latérale (60) du rouleau d'entraînement (20).

3. Dispositif de transport selon la revendication 1 ou 2, **caractérisé en ce que** le moyen de génération de force (44, 144) comprend un dispositif de réglage (48, 50, 47, 158, 149, 150) pour l'ajustement défini de la force d'application F_{P} pour le rouleau d'entraînement (20, 120).

4. Dispositif de transport selon l'une quelconque des revendications 1 à 3, **caractérisé en ce que** le rouleau d'entraînement (20, 120) est associé à une unité d'entraînement avec un moteur (24, 124) pouvant être déplacée avec l'axe de rotation (21, 121) du rouleau d'entraînement (20, 120).

5. Dispositif de transport selon l'une quelconque des revendications 1 à 4, **caractérisé en ce qu'**un ou plusieurs rouleaux de support montés à rotation (16, 116, 117) sont disposés sur le support (6, 8, 106, 108) pour recevoir la portion de roulement (4, 5, 104, 105) de l'unité de transport (3, 103).

6. Dispositif de transport selon la revendication 5, **caractérisé en ce que** les rouleaux de support disposés sur un support (8) avec les rouleaux d'entraînement (20) sont réalisés sous forme de rouleaux à bride (16).

7. Dispositif de transport selon l'une quelconque des revendications 1 à 6, **caractérisé en ce que** pour recevoir une unité de transport (3, 103) présentant deux portions de roulement (4, 5, 104, 105), en particulier réalisée sous forme de patin glissant, deux supports (6, 8, 106, 108) recevant le poids de l'unité de transport (3, 103) sur les portions de roulement (4, 5, 104, 105) sont prévus, et il existe une pluralité de rouleaux d'entraînement (20, 120) disposés au niveau d'un support (8, 106) avec un axe de rotation (21, 121) pouvant être déplacé par rapport à l'un des supports (8, 106), lequel axe de rotation est en liaison fonctionnelle avec un moyen de génération de force (44, 144) pour produire une force d'application F_{P} du rouleau d'entraînement (20, 120) contre la portion de roulement (5, 104) de l'unité de transport (5, 104) déplacée contre ce support (8, 106).

8. Dispositif de transport selon l'une quelconque des revendications 1 à 7, **caractérisé en ce que** pour détecter la position d'une unité de transport (3), des détecteurs de position (2) disposés le long du support (8) sont prévus.

9. Dispositif de transport selon l'une quelconque des revendications 1 à 8, **caractérisé en ce que** le support (72, 74) est reçu au niveau d'une unité de déplacement linéaire (86) pour le déplacement de l'unité de transport (80) dans une direction de transport supplémentaire (85).

10. Dispositif de transport selon l'une quelconque des revendications 1 à 9, **caractérisé par** un rouleau d'entraînement supplémentaire (120) coopérant pour un mouvement de roulement avec la portion de roulement (104, 105) de l'unité de transport (103), lequel rouleau d'entraînement sollicite l'unité de transport (103) avec une force F_{K} pour le déplacement le long du support (106, 108),
le rouleau d'entraînement supplémentaire (120) étant en liaison fonctionnelle avec un moyen de génération de force (144) pour fournir une force d'application F_{P} pressant le rouleau d'entraînement (120) contre la portion de roulement (104, 105) de l'unité de transport (103),
le rouleau d'entraînement supplémentaire (120) présentant un axe de rotation (121) déplaçable par rapport au support (106, 108),
le rouleau d'entraînement supplémentaire (120) étant monté à rotation au niveau d'un bras de levier (131) pouvant être sollicité avec le moyen de génération de force (144) et déplaçable par pivotement autour d'un axe de pivotement (130), la projection verticale de l'axe de pivotement (130) du bras de levier (131) sur la direction de transport (162) formant avec la direction de transport (162) un plan orienté horizontalement (164) ou un plan incliné par rapport à un plan horizontal suivant l'axe de pivotement (130) du bras de levier (131) et le moyen de génération de force (144) provoquant une force d'application F_{P} du rouleau d'entraînement (120) contre une surface (107) tournée vers le support (106) ou contre une surface de la portion de roulement (104) de l'unité de transport (103) tournée à l'opposé du support (106).

11. Dispositif de transport selon la revendication 10, **caractérisé en ce que** la force d'application F_{P} est produite au moyen d'un moyen de ressort (144) s'appuyant contre le support (106), lequel moyen de ressort est fixé au bras de levier (131).

12. Installation de peinture comprenant un dispositif de transport (1, 70, 101) selon l'une quelconque des revendications 1 à 11.
